(19) Europäisches Patentamt
European Patent Office
Office européen des brevets

(11) **EP 1 811 630 B1**

(12) **EUROPÄISCHE PATENTSCHRIFT**

(45) Veröffentlichungstag und Bekanntmachung des Hinweises auf die Patenterteilung:
**20.11.2013   Patentblatt 2013/47**

(51) Int Cl.:
*H02K 1/16* *(2006.01)*    *H02K 3/42* *(2006.01)*

(21) Anmeldenummer: **07100523.5**

(22) Anmeldetag: **15.01.2007**

(54) **Rotierende elektrische Maschine**

Rotating electrical machine

Machine électrique rotative

(84) Benannte Vertragsstaaten:
**DE FR GB IT**

(30) Priorität: **24.01.2006   CH 1092006**

(43) Veröffentlichungstag der Anmeldung:
**25.07.2007   Patentblatt 2007/30**

(73) Patentinhaber: **Alstom Technology Ltd**
**5400 Baden (CH)**

(72) Erfinder:
• **Haldermann, Johann**
**Birr 5242 (CH)**

• **Joho, Reinhard**
**Rombach 5022 (CH)**

(56) Entgegenhaltungen:
EP-A- 0 155 405    DE-A1- 3 334 501
DE-B- 1 078 681    JP-A- 2003 199 267
US-A- 2 795 714    US-A- 3 435 262
US-A- 4 208 597    US-A- 4 217 511
US-A- 4 638 199    US-B1- 6 346 755

• **PATENT ABSTRACTS OF JAPAN Bd. 005, Nr. 055**
**(E-052), 16. April 1981 (1981-04-16) & JP 56 006635**
**A (TOSHIBA CORP), 23. Januar 1981 (1981-01-23)**

**Beschreibung**

TECHNISCHES GEBIET

Die vorliegende Erfindung bezieht sich auf das Gebiet der elektrischen Maschinen. Sie betrifft eine rotierende elektrische Maschine gemäss dem Oberbegriff des Anspruchs 1.

STAND DER TECHNIK

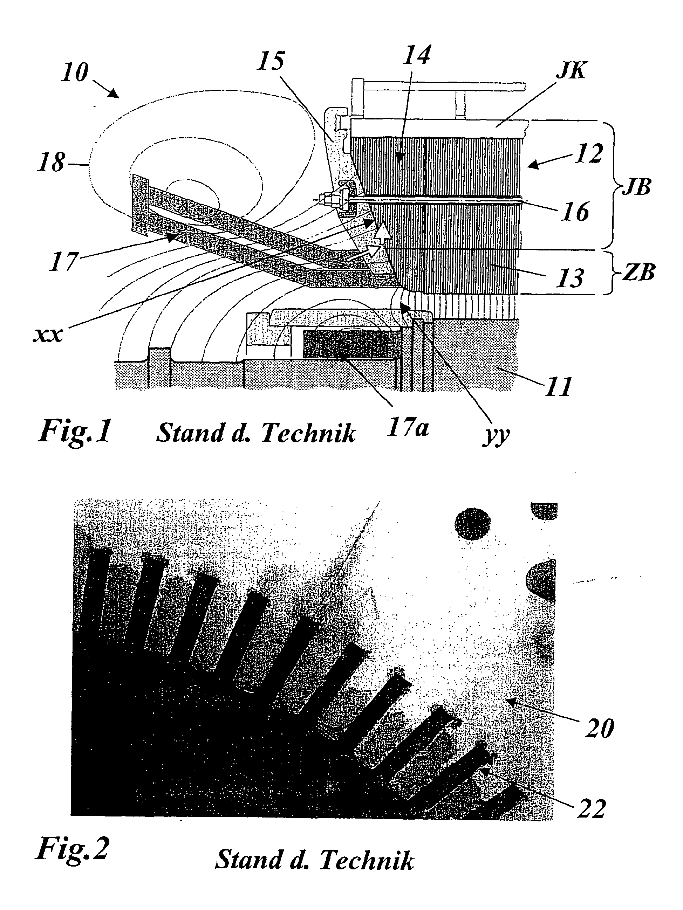

Lamellierte Pressplatten werden seit langem in grossen Turbogeneratoren mit $H_2/H_2O$-Kühlung eingesetzt (siehe z.B. "Erfolgreiche Nachrüstung eines 970 MVA-Turbogenerators", ABB Review 3/1988, S. 3 ff.). Die beispielhafte Anordnung einer solchen Pressplatte ist in Fig. 1 wiedergegeben. Fig. 1 zeigt einen Ausschnitt von einem Ende eines Turbogenerators 10, der einen zentralen Rotor 11 und einen den Rotor konzentrisch umgebenden Stator 12 umfasst. Der Stator 12 weist einen Statorblechkörper 13 auf, der an den zwei Axialenden durch lamellierte Pressplatten 14 begrenzt ist. Die Pressplatten 14 werden mittels Zugankern 16 und über den Umfang verteilt angeordneten Druckfingern 15 in axialer Richtung gegen den Statorblechkörper 13 gepresst. Die Funktion der Pressplatten 14 ist zum einen die Einleitung einer Axialpresskraft auf den Statorblechkörper 13 sowohl im Jochbereich JB, als auch in den am inneren Umfang des Statorblechkörpers 13 befindlichen Zahnbereich ZB, welcher die Statorwicklung aufnimmt, von der in Fig. 1 der endseitige Statorwickelkopf 17 zu sehen ist (der Rotor 11 hat einen entsprechenden Rotorwicklungskopf 17a). Zum anderen ist die Pressplatte 14 für die verlustarme Führung eines Teils des magnetischen Statorstirnfeldes (siehe die magnetischen Flusslinien 18 in Fig. 1) vorgesehen.

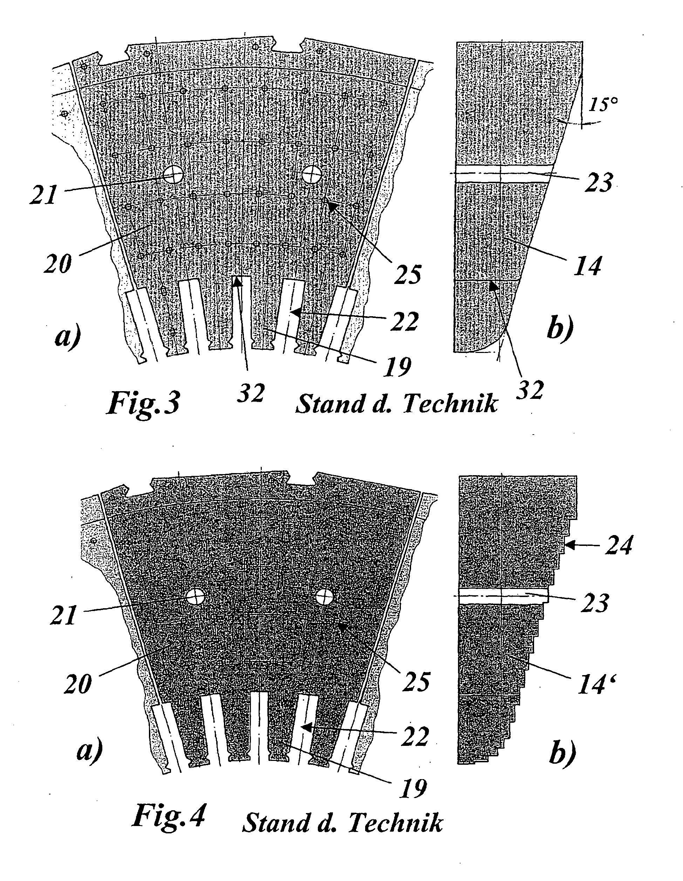

Die oben beschriebene lamellierte Pressplatte (14 in Fig. 1) besteht aus einzelnen Pressplattenblechen derselben Güte und desselben Blechschnittes wie die normalen Statorbleche. Derartige Pressplattenbleche 20, welche die Form eines Ringsektors haben und am inneren Umfang radiale Nuten 22 bzw. Zähne 19 zur Aufnahme der Statorwicklungsstäbe aufweisen, und mit ersten Löchern 21, die in der Pressplatte eine Bohrung 23 für die Zuganker bilden, und zweiten Löchern 25 zur Bildung axialer Kühlkanäle ausgestattet sein können, sind in den Fig. 3 und 4 dargestellt. Um bei der sich konisch erweiternden Pressplatte einen Konuswinkel $\delta$, vorzugsweise im Bereich 15-20°, zu erzielen, werden die Bleche lagenweise (Fig. 3b) oder blockweise (Pressplatte 14' Fig. 4b; Blockstufe 24) zurückgestanzt oder neuerdings komplett mit Laserstrahl geschnitten. Wie im Blechkörper sind auch die Pressplattenbleche 20 in der Pressplatte 14 bzw. 14' überlappt geschichtet.

Alle Bleche der lamellierten Pressplatte 14, 14' haben die übliche Blechisolierung wie die Bleche des Statorblechkörpers. Die Bleche der Pressplatte werden in einem letzten Schritt der Pressplattenherstellung unter Druck zu einem Ring verklebt. Eine solche Verklebung kann z.B. in einem Ofen einer Ganztränkanlage (Global-VPI) geschehen. Die Bleche können aber auch mit einem Backlack (Harz im B-Zustand) beschichtet sein und werden unter Pressung und Wärme miteinander verklebt. Die so hergestellte Pressplatte ist unter den Blechsegmenten absolut schlussfrei.

Üblicherweise sind in Jochmitte über den ganzen Umfang vorgespannte Zuganker bzw. -bolzen (16 in Fig. 1) vorgesehen, welche in den Pressplatten abgestützt sind und so den Blechkörper zwischen den Pressplatten dauerhaft gepresst halten.

Das magnetische Streufeld von Stator- und Rotorwickelkopf (17 bzw. 17a in Fig. 1) wird von der magnetischen Pressplatte angesaugt und tritt dabei normal zum Konus in die Pressplatte ein (Flusslinien 18 in Fig. 1). Unter Idealverhältnissen wird der eintretende magnetische Fluss (xx in Fig. 1) in jedem Blech anteilmässig übernommen und im Blech in Radialrichtung nach aussen und in Umfangrichtung umgelenkt (Pfeile in Fig. 1). Der magnetische Fluss sammelt und schliesst sich in Umfangsrichtung über eine Polteilung. Die Radialkomponente des Flusses entspricht einer um den Faktor $1/\sin\delta$ erhöhten Normalkomponente des Flusses. Mit einem Konuswinkel $\delta$ von beispielweise 15° wird die Radialkomponente ca. 4 mal grösser. Der eintretende Fluss biegt in Umfangsrichtung um und kumuliert sich durch weiteres Aufnehmen von Radialkomponenten. Dies führt zu einer magnetischen Sättigung der Pressplatte im Jochbereich.

Gleichzeitig überlagert sich etwas tiefer im Innenbereich der Pressplatte eine beträchtliche Komponente des Luftspalt-Hauptfeldes (yy in Fig. 1). Es ergibt sich eine Überlagerung der Komponenten Streufeld Statorwickelkopf, Streufeld Rotorwickelkopf und Hauptfeld. Diese Überlagerung ist abhängig von der Belastung und vom Phasenwinkel zwischen Statorstrom und Spannung, und äussert sich in einer Verdrehung des Rotors (Polradwinkel). Bekanntermassen kommt es bei untererregtem Betrieb (Statorstrom eilt der Spannung voraus) zur stärksten Überhöhung des Axialfeldes auf die Pressplatte. Im Fall der lamellierten Pressplatte versucht das Feld sich durch Wechsel in axial tieferliegende Blechlagen der Pressplatte auszugleichen.

Im Gegensatz zur üblichen massiven Pressplatte nimmt die lamellierte Pressplatte den eintretenden Stirnfluss auf und führt ihn geordnet über eine Polteilung. Die oben beschriebene Neigung zum ausgleichenden Axialfluss in der Pressplatte hat aber Nachteile:

1. Weil von Lage zu Lage der Bleche die Stossfuge tangential weit versetzt liegt, kann der Axialfluss nicht anders als durch die Bleche fliessen.
2. Der Axialfluss ergibt hohe Wirbelstromrückwirkung im Blech.

Die Wirbelstromrückwirkung kann zu hohen Temperaturen führen. Die maximal belastete Stelle liegt im Nutgrundbereich des Jochs. Zur Vermeidung von Überhitzung durch eintretendes Stirnfeld ist es weltweit etablierte Praxis, die Zähne, wenn nötig, über eine gewisse axiale Tiefe des Blechkörpers mit einem zur Bohrung offenen Schlitz zu versehen (z.B. Fig. 4 der DE-A-29 24 037).

Bei Grenzleistungsgeneratoren kann im untererregten Betrieb die Blecherwärmung im Nutgrundbereich so gross werden, dass sich ein Gewölbedruck aufbaut (Joch aussen kalt, innen heiss), der benachbarte Blechsegmente trotz Montagespalt (üblicherweise einige Zehntel mm) zur Berührung bringt (Schadensbild aus Statorendpartie in Fig. 2), denn die Gewölbedruckkräfte sind so stark, dass die Verklebungen unter den starken Scherkräften aufreissen und/oder fliessen. Durch die Berührung entstehen elektrische Schlüsse, welche die Verluste noch vergrössern. Bleche können sich lokal aufbäumen und als Folge axiale Schlüsse verursachen. In die so produzierte Fehlstelle wird auch das magnetische Luftspaltfeld yy (Fig. 1) der Maschine einen Fehlerstrom injizieren. Es kann zu einem selbstgetriebenen Ausbreiten der Fehlerstelle (Eisenbrand) kommen.

Die Druckschrift EP-A1-0 155 405 offenbart eine Einrichtung zur indirekten Gaskühlung der Ständerwicklung und/oder zur direkten Gaskühlung des Ständerblechpaketes dynamoelektrischer Maschinen. Dabei wird ausgegangen von einem Ständerblechpaket, bei dem zwischen axial aneinandergereihten Teilblechpaketen (2.2) des Ständerblechpaketes (2) Distanzstege (2.1) unter Bildung von Radialschlitzen (2a, 2b) für Kühlgas eingefügt sind. Zur Verwirklichung einer Zahninnenkühlung liegen an den Radialschlitzen liegen mit ersten gestanzten Langlöchern (12) vom Jochbereich bis in den Zahn hinein an. Die axial anschliessenden Bleche werden mit zweiten gestanzten Langlöchern (13) in Richtung Zahnkopf versehen, die mit den vorhergehenden Langlöchern (12) überlappen. Durch diese Art der versetzt gestanzten Langlöcher wird ein Kühlgasweg - axial und radial - durch die Zahnmitte bis hin zum Luftspalt geöffnet. Von am Ende des Ständerblechpaketes angeordneten lamellierten Pressplatten gemäss der vorliegenden Anmeldung sowie deren spezieller Ausgestaltung ist nicht die Rede.

Die Druckschrift US-A-4,208,597 beschreibt eine dynamoelektrische Maschine mit einem lamellierten Statorkern und Längsnuten zur Aufnahme der Statorwicklung, wobei der Statorkern mit am jeweiligen Ende angreifenden, Fingerplatten umfassenden Klemmvorrichtungen zusammengepresst ist. Zwischen den Fingerplatten und dem lamellierten Statorkern ist eine starre Belüftungsplatte (25) eingefügt, welche im wesentlichen die gleiche Konfiguration wie die Kernbleche hat. Die Belüftungsplatte weist radiale Rillen (31) auf und kann im Zahnbereich geschlitzt sein (Fig. 3). Über die lamellierten Pressplatten und deren Ausgestaltung ist nichts ausgesagt.

Die Druckschrift US-A-4,217,511, die der o.g. DE-A-29 24 037 entspricht, betrifft ein dynamoelektrische Maschine mit lamelliertem Statorkern, der längs verlaufende Nuten zur Aufnahme der Statorwicklung hat. In den Endbereichen des Statorkerns sind in den Zähnen der Kernbleche radiale Schlitze (26 in Fig. 3; 40 in Fig. 4) vorgesehen. Anstelle einer lamellierten Pressplatte werden hier jedoch Fingerplatten (12) und Endplatten (13) eingesetzt.

Die Druckschrift JP-A-56 006635 offenbart einen lamellierten Eisenkern einer rotierenden elektrischen Maschine, der in axialer Richtung in eine Vielzahl von Blöcken (2) unterteilt ist, die durch Abstandshalter (5) voneinander getrennt sind, die jeweils aus einer Trennplatte (3) und einer Endplatte (4) bestehen. In den Endplatten (4) sind zur Verbesserung der Kühlung ausgestanzte und hochgebogene Lappen vorgesehen. Mit lamellierten Pressplatten am Ende des Kerns hat diese Konfiguration nichts zu tun.

Aus der Druckschrift US 2,795,714 ist eine laminierte Endabschirmung für einen Turbinengenerator bekannt, bei denen die einzelnen Bleche am Innenrand mit radialen Schlitzen versehen sind, welche die Endfläche der Bleche vergrössern.

Die Druckschrift JP 2003199267 schliesslich zeigt einen laminierten Statorblechkörper, bei dem ein wirbelstrombedingter Temperaturanstieg an den Enden des Körpers durch radiale Schlitze in den Blechen vermieden wird, die zwischen den Wicklungsnuten angeordnet sind.

DARSTELLUNG DER ERFINDUNG

Es ist nun Aufgabe der Erfindung, die lamellierte Pressplatte am Stator einer rotierenden elektrischen Maschine so auszugestalten, dass die beschriebenen Nachteile vermieden und insbesondere die Wirbelstromverluste durch das Axialfeld verringert werden.

Die Aufgabe wird durch die Gesamtheit der Merkmale des Anspruchs 1 gelöst. Die Pressplattenbleche, aus denen die lamellierte Pressplatte aufgebaut ist, zur Verringerung der Wirbelstromverluste zumindest teilweise mit Schlitzen versehen sind. Die Schlitzung erfolgt (von innen her) zumindest im Jochbereich der Pressplatte. Die Schlitze sind so ausgeführt, dass die Bleche jeweils als Einheit verbleiben. Die Pressplattenbleche weisen die Form von Ringsegmenten auf, wobei die Schlitze in radialer Richtung verlaufen. Die Schlitze erstrecken sich von einer Innenkante der Pressplattenbleche ausgehend in das Innere der Pressplattenbleche und enden dort. Zumindest in einem Teil der Pressplattenbleche sind über den inneren Umfang verteilt radial bis zu einer vorgegebenen Tiefe in das Blech hineinreichende Nuten zur Aufnahme der Statorwicklung vorgesehen. Die Schlitze erstrecken sich erfindungsgemäss jeweils von einem Nutgrund ausgehend in das Innere der Pressplattenbleche.

Damit können folgende Effekte erzielt werden:

1. Die Wirbelstromverluste durch das Axialfeld werden verringert.
2. Der Axialfluss kann sich axial unter den Blechen viel besser ausgleichen.
3. Die mechanische Trennfuge zwischen Blechsegmenten wird durch diese weiteren "Trennfugen" dehnungsmässig entlastet. Weil die Schlitzung beinahe infinitesimal schmal ausgebildet werden kann, wird ein Magnetfluss in Umfangsrichtung aber kaum behindert.

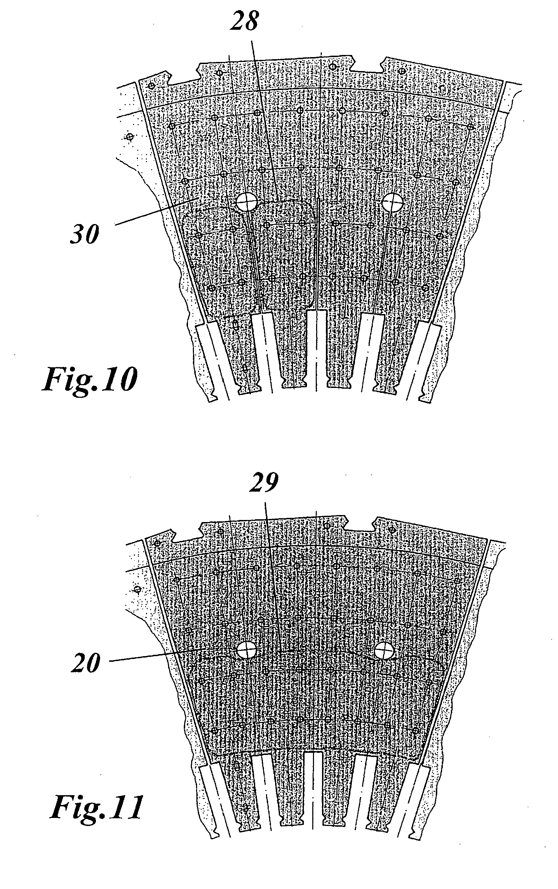

Die Wirbelstromverluste werden aus folgendem Grund geringer: Der Axialfluss dringt wegen der magnetischen Sättigung als begrenzter Fluss in die Pressplatte ein. Begrenzter Fluss ist aber gleichbedeutend mit begrenzter treibender Spannung für die Wirbelstrombahnen. Die Wirbelstrombahnen, welche man sich entlang der Blechkonturen verlaufend vorstellen muss, werden durch die Schlitzung länger (Vergleich Fig. 10 und 11 mit den Wirbelstrombahnen 28 mit Schlitzung, und 29 ohne Schlitzung).

Eine Ausgestaltung der Erfindung ist dadurch gekennzeichnet, dass alle Schlitze am gleichen Radius enden.

Eine Schlitzung von aussen nach innen ist nicht möglich, da

- die Jochkeile (JK in Fig. 1) die Bleche kurzschliessen, und
- die maximalen Verlustdichten im radial innenliegenden Nutgrundbereich auftreten.

Insbesondere enden die Schlitze, wenn in den Pressplattenblechen auf einem vorgegebenen Radius Löcher zum Durchstecken von Zugankern vorgesehen sind, mittels welcher die Pressplatten in axialer Richtung gegen den Statorblechkörper gepresst werden, an dem vorgegebenen Radius. Zumindest ein Teil der Schlitze kann dabei in den Löchern für die Zuganker enden.

Die Schlitze können dabei von der Mitte des Nutgrundes ausgehen und axial tiefe Schlitze bilden. Sie können aber auch von einer Stelle des Nutgrundes ausgehen, die gegenüber der Mitte des Nutgrundes seitlich versetzt ist. In diesem zweiten Fall werden die Bleche jeder zweiten Lage mit alternierender Versetzung versehen oder die Bleche jeder zweiten Lage werden gewendet. Damit wird eine leichte Überlappung der Bleche erreicht. Dies kann aus Gründen der mechanischen Stabilität von Vorteil sein, ergibt aber etwas höhere Wirbelstromverluste.

Die Schlitze sind über den Umfang verteilt angeordnet. Dabei ist es denkbar, dass sich von jeder Nut aus ein Schlitz in das Innere des Pressplattenbleches erstreckt. Es ist aber auch denkbar, dass sich nur von einem Teil der Nuten, insbesondere von jeder zweiten Nut, aus ein Schlitz in das Innere des Pressplattenbleches erstreckt. Vorzugsweise erweitern sich die Pressplatten nach aussen hin an ihrem inneren Umfang konisch, und die konische Erweiterung wird durch ein lagenweises oder blockweises Zurückstufen der Pressplattenbleche erreicht.

Gemäss einer anderen Ausgestaltung der Erfindung enden die Schlitze mitten im Pressplattenblech, und an den Enden der Schlitze sind Löcher angeordnet, die in der Pressplatte axiale Kühlkanäle bilden.

Vorzugsweise weisen die Schlitze eine Schlitzbreite im Millimeterbereich, insbesondere im Bereich zwischen 0,3 und 1,0 mm, auf, und sind durch ein Laserschneidverfahren hergestellt.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 in einer Schnittdarstellung die Anordnung einer lamellierten Pressplatte in einem Turbogenerator nach dem Stand der Technik;

Fig. 2 die photographische Darstellung eines Schadens in einer Stator-endpartie herkömmlicher Art;

Fig. 3 in zwei Teilfiguren ein herkömmliches ringsegmentförmiges Pressplattenblech nach dem Stand der Technik (Fig. 3a) und den Längsschnitt durch die daraus aufgebaute Pressplatte (Fig. 3b), wobei die Pressplattenbleche lagenweise zurückgestuft sind;

Fig. 4 in einer zu Fig. 3 vergleichbaren Darstellung das Pressplattenblech (Fig. 4a) und den Längsschnitt durch die daraus aufgebaute Pressplatte (Fig. 4b), wobei die Pressplattenbleche blockweise zurückgestuft sind (Blockstufe 24);

Fig. 5 in zwei Teilfiguren ein geschlitztes Pressplattenblech gemäss einem ersten Ausführungsbeispiel der Erfindung (Fig. 5a) und den Längsschnitt durch die daraus aufgebaute Pressplatte (Fig. 5b), wobei die Pressplattenbleche lagenweise zurückgestuft sind und die Schlitze von jeder Nut ausgehen;

Fig. 6 in einer zu Fig. 5b vergleichbaren Darstellung den Längsschnitt durch eine Pressplatte gemäss einem zweiten Ausführungsbeispiel der Erfindung, wobei die Pressplattenbleche lagenweise zurückgestuft sind und die Längen der Schlitze sich mit der Blechlage ändern;

Fig. 7 in einer zu Fig. 5a vergleichbaren Darstellung ein Pressplattenblech gemäss einem dritten Ausführungsbeispiel der Erfindung, wobei die Schlitze nur von jeder zweiten Nut ausgehen;

Fig. 8 in einer zu Fig. 5a vergleichbaren Darstellung ein Pressplattenblech gemäss einem vierten Ausführungsbeispiel der Erfindung, wobei die Schlitze in den Zähnen verlaufen und mitten im Pressplattenblech enden;

Fig. 9 in einer zu Fig. 5a vergleichbaren Darstellung zwei Pressplattenbleche gemäss einem fünften Ausführungsbeispiel der Erfindung, wobei die Schlitze vom Nutgrund ausgehend zur Mitte des Nutgrundes seitlich versetzt angeordnet sind, und Pressplattenbleche aufeinanderfolgender Lagen relativ zueinander gewendet eingebaut werden, so dass die Schlitze der Pressplattenbleche nicht fluchten;

Fig. 10 beispielhafte Wirbelstrombahnen in einem geschlitzten Pressplattenblech nach der Erfindung;

Fig. 11 vergleichbare Wirbelstrombahnen in einem ungeschlitzten Pressplattenblech nach dem Stand der Technik; und

Fig. 12 ein Pressplattenblech mit einem Schlitz, welcher sich vom Nutgrund ausgehend in einer von der radialen Richtung abweichenden Richtung ins Innere des Pressplattenbleches erstreckt.

## WEGE ZUR AUSFÜHRUNG DER ERFINDUNG

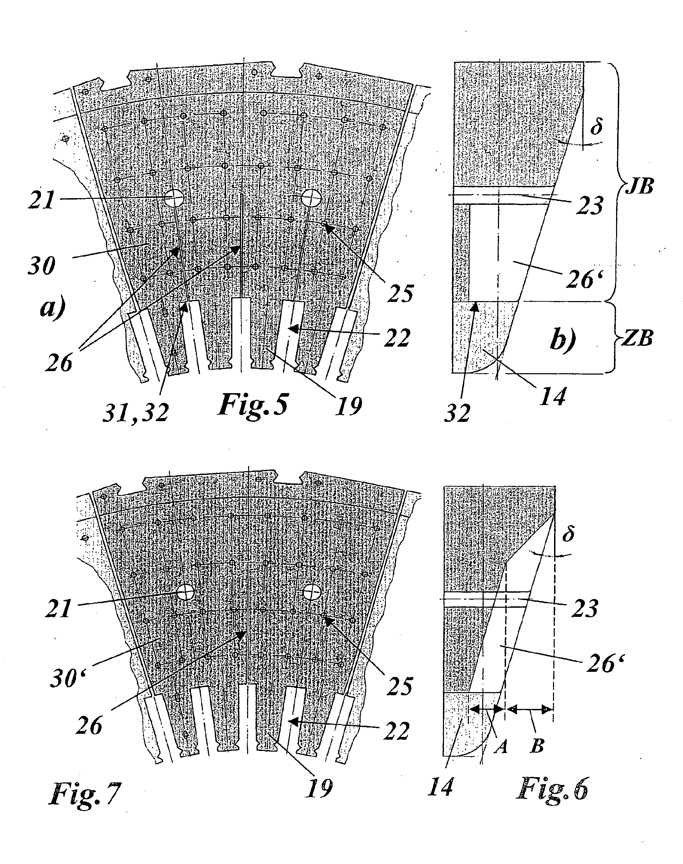

In den Fig. 5 bis 9 sind verschiedene Ausführungsbeispiele für geschlitzte Pressplattenbleche nach der Erfindung wiedergegeben. Die Schlitzung erfolgt vorzugsweise beim Blechlasern der Pressplattenbleche. Die ausgelaserten Schlitze 26 haben eine Schlitzbreite im Millimeterbereich und sind vorzugsweise 0,3 bis 1,0 mm breit. Die Pressplattenbleche sind von Material und Dicke sowie Oberflächenbeschichtung her in an sich bekannter Weise ausgelegt wie die Bleche des Statorblechkörpers.

Beim Pressplattenblech 30 gemäss dem in Fig. 5 dargestellten Ausführungsbeispiel enden die Schlitze 26, die von einer Innenkante 31 des Pressplattenbleches 30, hier von der Mitte des Nutgrundes 32 jeder Nut 22, radial nach aussen verlaufen, alle auf einem gemeinsamen Radius, der die Mitte der für die Zuganker bestimmten Löcher 21 festlegt und in der Mitte des Jochbereiches (JB in Fig. 1) liegt. In axialer Richtung ergibt sich in der Pressplatte 14 (Fig. 5b) ein durchgehender Schlitz 26' konstanter radialer Erstreckung.

Beim Ausführungsbeispiel der Fig. 6 variiert die radiale Erstreckung des Schlitzes 26 mit der Lage des Pressplattenbleches. Das Schlitzende ist hier in einem ersten Bereich A auf einer Parallelen zum Pressplattenkonus, in einem zweiten Bereich B auf den Konusrand zugehend.

Beim Ausführungsbeispiel der Fig. 7 wird das Pressplattenblech 30' nur in jedem zweiten Nutgrund 32 geschlitzt. Im Beispiel ergibt sich wegen der Segmentierung der Pressplattenbleche 30' dann nur ein Schlitz 26 pro Blech. Dabei können - wenn nötig - die Zähne 19 unterstützend in bekannter Art geschlitzt sein.

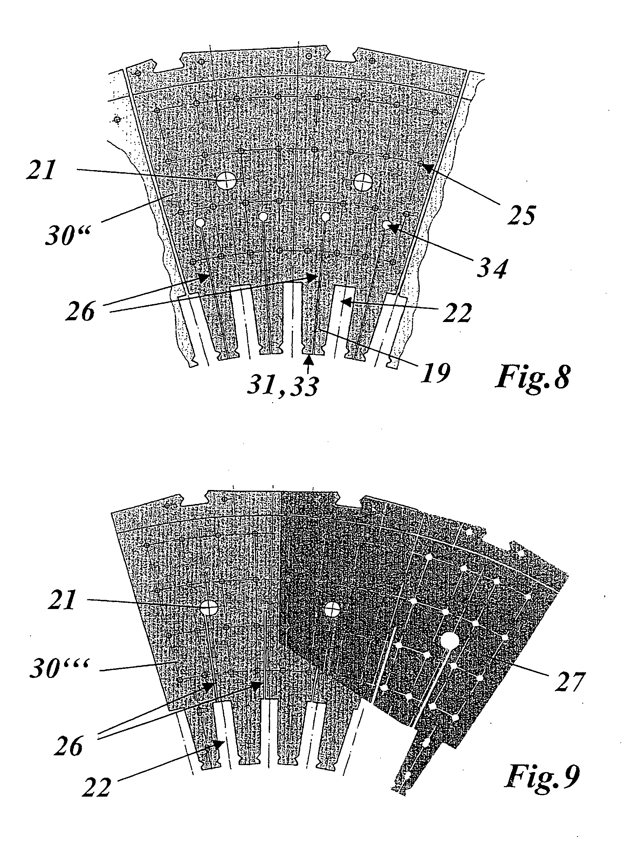

Beim Ausführungsbeispiel der Fig. 8 wird das Pressplattenblech 30" in der Mitte der Zähne 19 geschlitzt, d.h. die Innenkante 31 des Pressplattenbleches 30', von der die Schlitze 26 ausgehen, ist hier jeweils die Innenkante 33 der Zähne 19. Die Tiefe der Schlitze 26 geht über den Zahnbereich hinaus. Es ergibt sich eine günstige Kombination aus bekannter Zahnschlitzung mit der erfindungsgemässen Jochschlitzung.

Beim Ausführungsbeispiel der Fig. 9 sind die Schlitze 26 aus der Mitte des Nutgrundes 32 versetzt. Durch Wenden der Pressplattenbleche 30''' jeder zweiten Lage ergibt sich eine Überlappung, welche zusammen mit der beschriebenen Verklebung die mechanische Stabilität erhöht. Es ergibt sich aber auch eine leichte Vergrösserung der Verluste für die Axialkomponente.

Falls die Schlitze 26 nicht ohnehin in Löchern (wie z.B. die Löcher 21) enden, können am Ende der Schlitze 26 zum Abbau von Verlustkonzentration und mechanischer Spannungskonzentration Kreisausnehmungen (beispielhaft: Löcher 34 in Fig. 8) ausgebildet werden. Die Kreisausnehmungen, wie auch die Schlitze, können (im Falle mittiger Anordnung) zu Kühlzwecken (als axiale Kühlkanäle) verwendet werden.

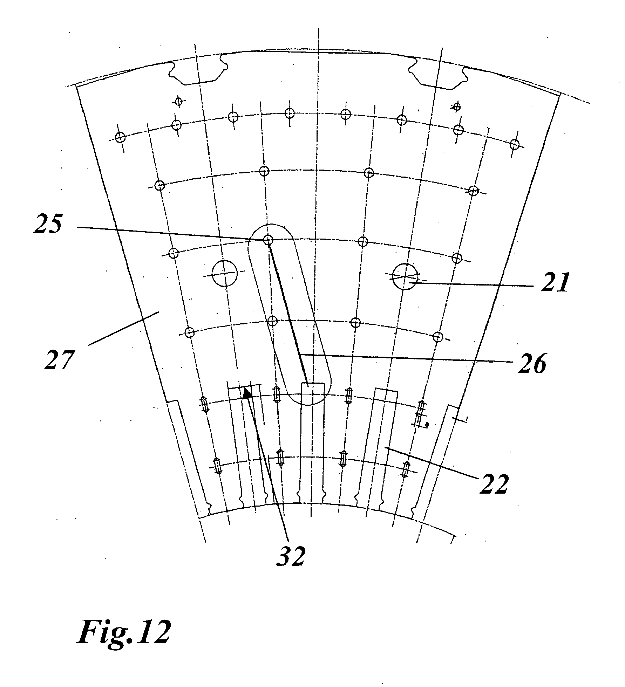

Ein weiteres Ausführungsbeispiel der Erfindung ist in Fig. 12 wiedergegeben. In diesem Beispiel werden im Pressplattenblech 27 Schlitze 26 verwendet, die in ihrer Richtung von der radialen Richtung abweichen. Im dargestellten Fall der Fig. 12 geht der Schlitz vom Nutgrund 32 ausserhalb der Mitte aus und endet in einem der Löcher 25, die beispielsweise als Kühlkanäle eingesetzt werden. Auch in diesem Fall können die Schlitze unterschiedlicher Lagen von Pressplattenblechen 27 gegeneinander versetzt angeordnet sein.

Die Wirkung der Schlitze 26 auf die Wirbelstromverluste kann wie folgt abgeschätzt werden (Fig. 10, 11):

Die Verluste ergeben sich nach

$$P_{wirbel} = (U^2/R_{wirbelstrombahn}) * n_{Wirbel}$$

$P_{wirbel}$ = Wirbelstromverlustleistung
U = treibende Spannung
$R_{wirbelstrombahn}$ = Widerstand der Wirbelstrombahn
$n_{wirbel}$ = Anzahl der Wirbel

Am Beispiel der Konfigurationen in Fig. 10 und 11 ergibt sich (alle Werte vergleichend in per-unit (pu)-Einheiten):

$$\text{Ungeschlitzt (Fig. 11): } P_{wirbel} \approx (1^2/1) * 1 = 1 \text{ pu}$$

$$\text{Geschlitzt (Fig. 10): } P_{wirbel} \approx (0.25^2/0.5) * 4 = 0.5 \text{ pu}$$

Mit einer Schlitzung der in Fig. 10 dargestellten Pressplatten 30 wird gegenüber den Wirbelstrombahnen 29 eines ungeschlitzten Pressplattenbleches 20 (vgl. Fig. 11) die vierfache Anzahl an Wirbelstrombahnen 28 erzeugt. Dabei beträgt die treibende Spannung der Wirbelstrombahnen 28 nur noch 1/4 der entsprechenden Spannung, und die Länge der Wirbelstrombahnen 28 jeweils nur ca. 50% der Länge der Wirbelstrombahnen 29 eines ungeschlitzten Pressplattenbleches 20.

Total sind also nur noch 50% der ungeschlitzten Verluste vorhanden.

BEZUGSZEICHENLISTE

| | |
|---|---|
| 10 | rotierende elektrische Maschine (Turbogenerator) |
| 11 | Rotor |
| 12 | Stator |
| 13 | Statorblechkörper |
| 14,14' | Pressplatte (lamelliert) |
| 15 | Druckfinger |
| 16 | Zuganker |
| 17 | Statorwickelkopf |
| 17a | Rotorwickelkopf |
| 18 | Flusslinie |
| 19 | Zahn |
| 20 | Pressplattenblech |
| 21 | Loch (Zuganker) |
| 22 | Nut |
| 23 | Bohrung (Zuganker) |
| 24 | Blockstufe |
| 25,31 | Loch (axialer Kühlkanal) |
| 26,26' | Schlitz |

| | |
|---|---|
| 27 | Pressplattenblech (schräger Schlitz) |
| 28,29 | Wirbelstrombahn |
| 30,30',30",30''' | Pressplattenblech (geschlitzt) |
| 31 | Innenkante von 30,30',30",30''' |
| 32 | Nutgrund von 22 |
| 33 | Innenkante von 19 |
| JB | Jochbereich |
| JK | Jochkeil |
| ZB | Zahnbereich |
| A,B | Bereich |
| xx,yy | Fluss (magnetisch) |
| δ | Konuswinkel |

**Patentansprüche**

1.  Rotierende elektrische Maschine (10), insbesondere Turbogenerator, mit einem Rotor (11) und einem den Rotor (11) konzentrisch umschliessenden Stator (12) mit einem Statorblechkörper (13), welcher an den beiden Axialenden jeweils durch eine aus einem Stapel von einzelnen Pressplattenblechen (27, 30, 30', 30", 30''') aufgebaute, lamellierte, Pressplatte (14) begrenzt wird, wobei die Pressplattenbleche (27, 30, 30', 30", 30''') zur Verringerung der Wirbelstromverluste zumindest teilweise mit Schlitzen (26) versehen sind, die Pressplattenbleche (30, 30', 30", 30''') die Form von Ringsegmenten aufweisen, die Schlitze (26) in radialer Richtung verlaufen, sich die Schlitze (26) von einer Innenkante (31) der Pressplattenbleche (27, 30, 30', 30", 30''') ausgehend in das Innere der Pressplattenbleche (27, 30, 30', 30", 30''') erstrecken und dort enden, und wobei zumindest in einem Teil der Pressplattenbleche (27, 30, 30', 30", 30''') über den inneren Umfang verteilt radial bis zu einer vorgegebenen Tiefe in das Blech hineinreichende Nuten (22) zur Aufnahme der Statorwicklung vorgesehen sind, **dadurch gekennzeichnet, dass** die Schlitze (26) sich jeweils von einem Nutgrund (32) ausgehend in das Innere der Pressplattenbleche (27, 30, 30', 30", 30''') erstrecken.

2.  Maschine nach Anspruch 1, **dadurch gekennzeichnet, dass** alle Schlitze (26) am gleichen Radius enden.

3.  Maschine nach Anspruch 2, **dadurch gekennzeichnet, dass** in den Pressplattenblechen (27, 30, 30', 30", 30''') auf einem vorgegebenen Radius Löcher (21) zum Durchstecken von Zugankern (16) vorgesehen sind, mittels welcher die Pressplatten (14) in axialer Richtung gegen den Statorblechkörper (13) gepresst werden, und dass die Schlitze (26) an dem vorgegebenen Radius enden.

4.  Maschine nach Anspruch 3, **dadurch gekennzeichnet, dass** zumindest ein Teil der Schlitze (26) in den Löchern (21) für die Zuganker (16) endet.

5.  Maschine nach Anspruch 1, **dadurch gekennzeichnet, dass** die Schlitze (26) von der Mitte des Nutgrundes (32) ausgehen.

6.  Maschine nach Anspruch 1, **dadurch gekennzeichnet, dass** die Schlitze (26) von einer Stelle des Nutgrundes (32) ausgehen, die gegenüber der Mitte des Nutgrundes (32) seitlich versetzt ist.

7.  Maschine nach Anspruch 1, **dadurch gekennzeichnet, dass** sich von jeder Nut (22) aus ein Schlitz (26) in das Innere des Pressplattenbleches (27, 30, 30', 30", 30''') erstreckt.

8.  Maschine nach Anspruch 1, **dadurch gekennzeichnet, dass** sich nur von einem Teil der Nuten (22) aus, insbesondere von jeder zweiten Nut (22), ein Schlitz (26) in das Innere des Pressplattenbleches (27, 30, 30', 30", 30''') erstreckt.

9.  Maschine nach einem der Ansprüche 1 bis 8, **dadurch gekennzeichnet, dass** sich die Pressplatten (14) nach aussen hin an ihrem inneren Umfang konisch erweitern, und dass die konische Erweiterung durch ein lagenweises oder blockweises Zurückstufen der Pressplattenbleche (27, 30, 30', 30", 30''') erreicht wird.

10. Maschine nach Anspruch 1, **dadurch gekennzeichnet, dass** die Schlitze (26) übereinanderliegender Pressplattenbleche (30, 30') fluchten und in axialer Richtung in die Pressplatte (14) hineingehende Schlitze (26') bilden.

11. Maschine nach Anspruch 1, **dadurch gekennzeichnet, dass** die Schlitze (26) übereinanderliegender Pressplattenbleche in Umfangsrichtung der Pressplatte (14) gegeneinander versetzt sind.

12. Maschine nach Anspruch 11, **dadurch gekennzeichnet, dass** die Versetzung der Schlitze (26) übereinanderliegender Pressplattenbleche durch eine lagenweise Positionsänderung der Pressplattenbleche und/oder durch das lagenweise Wenden von Pressplattenblechen (30''') mit aussermittigen Schlitzen (26) erreicht wird.

13. Maschine nach Anspruch 1, **dadurch gekennzeichnet, dass** die Schlitze (26) mitten im Pressplattenblech (27, 30, 30', 30'', 30''') enden, und dass an den Enden der Schlitze (26) Löcher (34) angeordnet sind.

14. Maschine nach Anspruch 13, **dadurch gekennzeichnet, dass** die Löcher (34) in der Pressplatte (14) axiale Kühlkanäle bilden.

15. Maschine nach Anspruch 1, **dadurch gekennzeichnet, dass** die Schlitze (26) eine Breite im Millimeterbereich, vorzugsweise im Bereich zwischen 0,3 und 1,0 mm, aufweisen.

16. Maschine nach Anspruch 1, **dadurch gekennzeichnet, dass** die Schlitze (26) durch ein Laserschneidverfahren hergestellt sind.

**Claims**

1. A rotating electrical machine (10), in particular a turbogenerator, comprising a rotor (11) and a stator (12), which concentrically surrounds the rotor (11) and has a laminated stator core (13), which is terminated at each of the two axial ends by means of a laminated press plate (14), which is constructed from a stack of individual press plate laminates (27, 30, 30', 30'', 30'''), wherein the press plate laminates (27, 30, 30', 30'', 30''') are provided at least partially with slits (26) for reducing the eddy current losses, the press plate laminates (30, 30', 30'', 30''') have the form of ring segments, the slits (26) run in the radial direction the slits (26), starting from an inner edge (31) of the press plate laminates (27, 30, 30', 30'', 30'''), extend into the interior of the press plate laminates (27, 30, 30', 30'', 30''') and end there, and wherein slots (22), which reach radially into the laminate up to a predetermined depth, for accommodating the stator winding are provided at least in some of the press plate laminates (27, 30, 30', 30'', 30'''), distributed over the inner circumference, **characterized in that** the slits (26) each extend, starting from a slot base (32), into the interior of the press plate laminates (27, 30, 30', 30'', 30''').

2. Machine according to Claim 1, **characterized in that** all of the slits (26) end at the same radius.

3. Machine according to Claim 2, **characterized in that** holes (21) for passing through clamping bolts (16) are provided in the press plate laminates (27, 30, 30', 30'', 30''') on a predetermined radius, by means of which clamping bolts the press plates (14) are pressed against the laminated stator core (13) in the axial direction, and **in that** the slits (26) end at the predetermined radius.

4. Machine according to Claim 3, **characterized in that** at least some of the slits (26) end in the holes (21) for the clamping bolts (16).

5. Machine according to Claim 1, **characterized in that** the slits (26) start from the center of the slot base (32).

6. Machine according to Claim 1, **characterized in that** the slits (26) start from a point on the slot base (32) which is laterally offset with respect to the center of the slot base (32).

7. Machine according to Claim 1, **characterized in that** a slit (26) extends from each slot (22) into the interior of the press plate laminate (27, 30, 30', 30'', 30''') .

8. Machine according to Claim 1, **characterized in that** a slit (26) extends only from some of the slots (22), in particular from every second slot (22), into the interior of the press plate laminate (27, 30, 30', 30'', 30''').

9. Machine according to one of Claims 1 to 8, **characterized in that** the press plates (14) extend conically outwards at their inner circumference, and **in that** the conical extent is achieved by the press plate laminates (27, 30, 30', 30'', 30''') being stepped back in layers or blocks.

**10.** Machine according to Claim 1, **characterized in that** the slits (26) of press plate laminates (30, 30') which lie one above the other are aligned and form slits (26'), which pass into the press plate (14) in the axial direction.

**11.** Machine according to Claim 1, **characterized in that** the slits (26) of press plate laminates which lie one above the other are offset with respect to one another in the circumferential direction of the press plate (14).

**12.** Machine according to Claim 11, **characterized in that** the offset of the slits (26) of press plate laminates which lie one above the other is achieved by the position of the press plate laminates being changed in layers and/or by press plate laminates (30''') with eccentric slits (26) being turned in layers.

**13.** Machine according to Claim 1, **characterized in that** the slits (26) end centrally in the press plate laminate (27, 30, 30', 30'', 30'''), and **in that** holes (34) are arranged at the ends of the slits (26).

**14.** Machine according to Claim 13, **characterized in that** the holes (34) form axial cooling channels in the press plate (14).

**15.** Machine according to Claim 1, **characterized in that** the slits (26) have a width in the millimeters range, preferably in the range of between 0.3 and 1.0 mm.

**16.** Machine according to Claim 1, **characterized in that** the slits (26) are produced by a laser cutting process.


**Revendications**

**1.** Machine électrique rotative (10), en particulier turbo-alternateur, comprenant un rotor (11) et un stator (12) entourant concentriquement le rotor (11) avec un corps en tôle statorique (13) qui est limité aux deux extrémités axiales à chaque fois par une plaque de pressage (14) stratifiée formée d'un empilement de tôles de plaque de pressage individuelles (27, 30, 30', 30'', 30'''), les tôles de plaque de pressage (27, 30, 30', 30'', 30''') étant munies, pour réduire les pertes par courant de Foucault, au moins en partie de fentes (26), les tôles de plaque de pressage (30, 30', 30'', 30''') présentant la forme de segments annulaires, les fentes (26) s'étendant dans la direction radiale, les fentes (26) s'étendant depuis un bord intérieur (31) des tôles de plaque de pressage (27, 30, 30', 30'', 30''') jusqu'à l'intérieur des tôles de plaque de pressage (27, 30, 30', 30'', 30''') et s'y terminant, et des rainures (22) s'étendant radialement jusqu'à une profondeur prédéfinie dans la tôle étant prévues de manière répartie sur la périphérie intérieure au moins dans une partie des tôles de plaque de pressage (27, 30, 30', 30'', 30''') pour recevoir l'enroulement statorique, **caractérisée en ce que** les fentes (26) s'étendent à chaque fois depuis une base de rainure (32) jusqu'à l'intérieur des tôles de plaque de pressage (27, 30, 30', 30'', 30''').

**2.** Machine selon la revendication 1, **caractérisée en ce que** toutes les fentes (26) se terminent au même rayon.

**3.** Machine selon la revendication 2, **caractérisée en ce que** des trous (21) pour le passage de tirants d'ancrage (16) sont prévus dans les tôles de plaque de pressage (27, 30, 30', 30'', 30''') sur un rayon prédéfini, au moyen desquels tirants d'ancrage les plaques de pressage (14) sont pressées dans la direction axiale contre le corps en tôle statorique (13), et **en ce que** les fentes (26) se terminent sur le rayon prédéfini.

**4.** Machine selon la revendication 3, **caractérisée en ce qu'**au moins une partie des fentes (26) se termine dans les trous (21) pour les tirants d'ancrage (16).

**5.** Machine selon la revendication 1, **caractérisée en ce que** les fentes (26) partent du centre de la base de rainure (32).

**6.** Machine selon la revendication 1, **caractérisée en ce que** les fentes (26) partent d'un point de la base de rainure (32) qui est décalé latéralement par rapport au centre de la base de rainure (32).

**7.** Machine selon la revendication 1, **caractérisée en ce qu'**une fente (26) s'étend depuis chaque rainure (22) jusqu'à l'intérieur de la tôle de plaque de pressage (27, 30, 30', 30'', 30''').

**8.** Machine selon la revendication 1, **caractérisée en ce qu'**une fente (26) s'étend jusqu'à l'intérieur de la tôle de plaque de pressage (27, 30, 30', 30'', 30''') seulement depuis une partie des rainures (22), en particulier depuis une rainure (22) sur deux.

9. Machine selon l'une quelconque des revendications 1 à 8, **caractérisée en ce que** les plaques de pressage (14) s'élargissent vers l'extérieur coniquement au niveau de leur périphérie interne, et **en ce que** l'élargissement conique est obtenu par un recul par couches ou par blocs des tôles de plaque de pressage (27, 30, 30', 30", 30"').

10. Machine selon la revendication 1, **caractérisée en ce que** les fentes (26) sont en affleurement avec des tôles de plaque de pressage (30, 30') superposées, et forment dans la direction axiale des fentes (26') entrant dans la plaque de pressage (14).

11. Machine selon la revendication 1, **caractérisée en ce que** les fentes (26) de tôles de plaque de pressage superposées sont décalées les unes par rapport aux autres dans la direction périphérique de la plaque de pressage (14).

12. Machine selon la revendication 11, **caractérisée en ce que** le décalage des fentes (26) de tôles de plaque de pressage superposées est réalisé par une variation de position par couches des tôles de plaque de pressage et/ou par la rotation par couches des tôles de plaque de pressage (30"') avec des fentes décentrées (26).

13. Machine selon la revendication 1, **caractérisée en ce que** les fentes (26) se terminent au centre dans la tôle de plaque de pressage (27, 30, 30', 30", 30"'), et **en ce que** des trous (34) sont disposés aux extrémités des fentes (26).

14. Machine selon la revendication 13, **caractérisée en ce que** les trous (34) forment des canaux de refroidissement axiaux dans la plaque de pressage (14).

15. Machine selon la revendication 1, **caractérisée en ce que** les fentes (26) présentent une largeur de l'ordre du millimètre, de préférence de l'ordre de 0,3 à 1,0 mm.

16. Machine selon la revendication 1, **caractérisée en ce que** les fentes (26) sont fabriquées par un procédé de découpage au laser.

**Fig.1** *Stand d. Technik*

**Fig.2** *Stand d. Technik*

21

20

25

22

19

32

**a)**

**Fig.3** **Stand d. Technik**

15°

23

14

32

**b)**

21

20

25

22

19

**a)**

**Fig.4** **Stand d. Technik**

24

23

14'

**b)**

Fig.5

Fig.6

Fig.7

21

30"

26

25

34

22

19

31,33

*Fig.8*

21

30""

26

22

27

*Fig.9*

**Fig.10**

**Fig.11**

25

27

21

26

22

32

*Fig.12*

## IN DER BESCHREIBUNG AUFGEFÜHRTE DOKUMENTE

**In der Beschreibung aufgeführte Patentdokumente**

- DE 2924037 A
- EP 0155405 A1
- US 4208597 A
- US 4217511 A
- JP 56006635 A
- US 2795714 A
- JP 2003199267 B

**In der Beschreibung aufgeführte Nicht-Patentliteratur**

- Erfolgreiche Nachrüstung eines 970 MVA-Turbogenerators. *ABB Review,* Marz 1988, 3 ff